(19) Europäisches Patentamt / European Patent Office / Office européen des brevets

(11) **EP 1 968 838 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(21) Anmeldenummer: **06828562.6**

(22) Anmeldetag: **29.11.2006**

(51) Int Cl.:
*B60K 6/48* (2007.10)     *B60W 10/08* (2006.01)
*B60W 10/11* (2012.01)     *B60W 30/20* (2006.01)
*F16H 3/00* (2006.01)      *F16H 3/093* (2006.01)

(86) Internationale Anmeldenummer:
**PCT/DE2006/002101**

(87) Internationale Veröffentlichungsnummer:
**WO 2007/073711 (05.07.2007 Gazette 2007/27)**

(54) **KRAFTFAHRZEUGANTRIEBSSTRANG UND VERFAHREN ZUR REDUZIERUNG VON RUPFSCHWINGUNGEN IN EINEM SOLCHEN**

AUTOMOTIVE DRIVE TRAIN AND METHOD FOR REDUCING CHATTER IN THE SAME

CHAINE CINEMATIQUE DE VEHICULE AUTOMOBILE ET PROCEDE POUR REDUIRE LES VIBRATIONS DE BROUTEMENT DANS UNE TELLE CHAINE CINEMATIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.12.2005 DE 102005062309**

(43) Veröffentlichungstag der Anmeldung:
**17.09.2008 Patentblatt 2008/38**

(73) Patentinhaber: **Schaeffler Technologies AG & Co. KG**
**91074 Herzogenaurach (DE)**

(72) Erfinder:
• **WINKELMANN, Stefan**
**77815 Bühl (DE)**
• **SEREBRENNIKOV, Boris**
**76532 Baden-Baden (DE)**

(56) Entgegenhaltungen:
**WO-A-2004/037593     DE-A1- 10 325 262**
**DE-A1- 19 532 163     DE-A1- 19 721 298**
**DE-A1-102004 062 012     DE-A1-102005 034 794**
**US-A1- 2006 030 979**

**Beschreibung**

Die Erfindung betrifft ein Verfahren zur Reduzierung von Rupfschwingungen in einem Kraftfahrzeugantriebsstrang, der eine Verbrennungsmaschine als Antrieb sowie eine Kupplungseinrichtung aufweist, wobei ein rotierendes Bauteil des Antriebsstrangs mit Hilfe der Verbrennungsmaschine angetrieben und die Drehzahl des Bauteils erfasst wird, und wobei detektiert wird, ob Rupfschwingungen vorhanden sind. Ferner betrifft die Erfindung einen Kraftfahrzeugantriebsstrang, der eine Verbrennungsmaschine als Antrieb, eine Kupplungseinrichtung und einer Einrichtung zur Erfassung der Drehzahl eines rotierenden Bauteils des Antriebsstrangs aufweist, wobei die Einrichtung zur Erfassung der Drehzahl mit einer Steuerund/oder Regelungsvorrichtung verbunden ist.

Ein derartiges Verfahren und ein derartiger Kraftfahrzeugantriebsstrang, bei dem während der Schlupfphase einer Kupplung selbst erregte Rupfschwingungen im Antriebsstrang auftreten, sind aus DE 102 44 026 A1 bekannt. Die Rupfschwingungen sind durch einen negativen Reibwertgradienten der Kupplung verursacht, durch den die Dämpfung im Antriebsstrang negativ wird. Die Schwingungen werden von den Antriebsrädern des Kraftfahrzeugs in Längsschwingungen umgewandelt und von den Fahrzeuginsassen als nachteilig empfunden. Zur Reduzierung der Amplitude der Rupfschwingungen wirkt eine in dem Antriebsstrang angeordnete Getriebebremse derart auf ein rotierendes Bauteil im Fahrzeugantriebsstrang ein, dass dieses kontinuierlich oder periodisch in seiner Drehbewegung abgebremst wird. Die Getriebebremse ermöglicht jedoch nur eine begrenzte Reduzierung der Rupfschwingungen.

Die deutsche Offenlegungsschrift DE 197 21 298 A1, die als nächstliegender Stand der Technik angesehen wird und die Merkmale der Präambel des unabhängigen Anspruchs 1 zeigt, offenbart einen Hybridfahrantrieb für ein Kraftfahrzeug. Der Hybridfahrantrieb umfasst einen Verbrennungsmotor und eine mit dem Verbrennungsmotor gekuppelte oder kuppelbare, als Generator und/oder als Motor betreibbare elektrische Maschine. Für die aktive Schwingungsdämpfung von Schwingungen, insbesondere Drehschwingungen im Drehmomentübertragungsweg zwischen dem Verbrennungsmotor und von diesem angetriebenen Rädern, sind Regelungsmittel vorgesehen, die auf ein von einer Sollsignalvorgabeeinrichtung vorgegebenes Sollsignal ansprechen.

Es besteht deshalb die Aufgabe, ein Verfahren und eine Vorrichtung der eingangs genannten Art zu schaffen, die eine wirkungsvolle Abschwächung der Rupfschwingungen ermöglicht.

Diese Aufgabe wird bezüglich des Verfahrens dadurch gelöst, dass beim Auftreten von Rupfschwingungen zum aktiven Dämpfen der Rupfschwingungen mit Hilfe eines Elektromotors derart ein Drehmoment auf das rotierende Bauteil übertragen wird, dass bei einer Rupfschwingungskomponente, bei der die Drehzahl des rotierenden Bauteils abnimmt, das rotierende Bauteil mit Hilfe des Elektromotors angetrieben und bei einer Rupfschwingungskomponente, bei der die Drehzahl des rotierenden Bauteils zunimmt, das rotierende Bauteil mit Hilfe des Elektromotors abgebremst wird.

Das Drehmoment des Elektromotors wird also derart moduliert, dass die Rupfschwingungen aktiv gedämpft werden. Dabei wird die Amplitude der Rupfschwingungen in beiden Richtungen wirkungsvoll abgeschwächt. Mit dem Verfahren können sowohl Rupfschwingungen reduziert werden, die durch einen negativen Reibwertgradienten der Kupplung verursacht sind, als auch Rupfschwingungen, die aufgrund von geometrischen Ungleichförmigkeiten auftreten. In vorteilhafter Weise kann der Elektromotor außer zur Dämpfung der Rupfschwingungen auch als Antriebsmotor für den Kraftfahrzeugantriebsstrang genutzt werden, und zwar zusätzlich zu der Verbrennungsmaschine und/oder anstelle der Verbrennungsmaschine. Die Verbrennungsmaschine kann dann entsprechend kleiner dimensioniert werden. Ein derartiger Hybridantrieb ermöglicht gegenüber einer Verbrennungsmaschine ohne Elektromotor eine deutliche Reduzierung des Kraftstoffverbrauchs, indem die Verbrennungsmaschine im Schub von den Antriebsrädern des Kraftfahrzeugantriebsstrangs abgekoppelt und die Verzögerungsenergie des Kraftfahrzeugs mit Hilfe des Elektromotors in elektrische Energie umgewandelt und beispielsweise in einem Akku zwischengespeichert wird.

Bei einer zweckmäßigen Ausführungsform der Erfindung ist das rotierende Bauteil eine Eingangswelle eines Schaltgetriebes, insbesondere eines Parallelschaltgetriebes, wobei zum Erfassen der Drehzahl ein Drehzahlsignal für die Eingangswelle gemessen wird. Dabei wird das Drehzahlsignal vorzugsweise induktiv gemessen.

Vorteilhaft ist, wenn ein Steuersignal für das Drehmoment des Elektromotors bereitgestellt wird, wenn ein Signal für eine in dem Drehzahlsignal enthaltene rupfende Komponente vorzugsweise durch Hochpassfilterung des Drehzahlsignals erzeugt wird, wenn aus dem Steuersignal und dem Signal für die rupfende Komponente ein Differenzsignal gebildet und das Drehmoment des Elektromotors in Abhängigkeit von dem Differenzsignal eingestellt wird. Die Rupfschwingungen können dann noch wirkungsvoller abgeschwächt werden.

Dabei wird das Drehmoment des Elektromotors bevorzugt proportional zu der Amplitude des Differenzsignals eingestellt, wobei ggf. ein parametrierbarer Proportionalitätsfaktor zur Anwendung kommen kann.

Bei einer vorteilhaften Ausführungsform der Erfindung wird die mittlere Beschleunigung des rotierenden Bauteils ermittelt, wobei das Steuersignal derart gewählt wird, dass die Beschleunigung des Elektromotors mit der mittleren Beschleunigung des rotierenden Bauteils übereinstimmt. Damit muss die Masse des Elektromotors nicht durch die Verbrennungsmaschine beschleunigt werden.

Bei einer bevorzugten Ausgestaltung der Erfindung ist vorgesehen, dass der Kraftfahrzeugantriebsstrang eine Verbrennungsmaschine, einen Elektromotor, eine Kupplungseinrichtung und ein Parallelschaltgetriebe mit einem Antriebsteil und einer ersten sowie einer zweiten Eingangswelle aufweist, dass die Kupplungseinrichtung eine erste Kupplung zum Verbinden des Antriebsteils mit der ersten Eingangswelle und eine zweite Kupplung zum Verbinden des Antriebsteils mit der zweiten Eingangswelle hat, umfassend folgende Schritte:

a) die Kupplungen werden in eine Offenstellung gebracht, in der die erste Eingangswelle und die zweite Eingangswelle von dem Antriebsteil getrennt sind,

b) für einen Anfahrvorgang wird das Parallelschaltgetriebe derart eingestellt, dass die erste Eingangswelle (17a) über einen ersten Gang und die zweite Getriebewelle (17b) über einen zweiten Gang mit einer Ausgangswelle (22) des Parallelschaltgetriebes in Antriebsverbindung steht,

c) die erste Kupplung (K1) wird zumindest soweit geschlossen, dass sie ein Drehmoment übertragen kann,

d) es wird detektiert, ob Rupfschwingungen vorhanden sind,

e) wenn Rupfschwingungen vorhanden sind, wird mit Hilfe des Elektromotors (11) derart ein Drehmoment auf die zweite Eingangswelle (17b) übertragen, dass bei einer Rupfschwingungskomponente, bei der die Drehzahl der zweiten Eingangswelle (17b) abnimmt, diese mit Hilfe des Elektromotors (11) angetrieben und bei einer Rupfschwingungskomponente, bei der die Drehzahl der zweiten Eingangswelle (17b) zunimmt, diese mit Hilfe des Elektromotors (11) abgebremst wird,

f) es wird mit Schritt d) fortgefahren.

Während des Anfahrvorgangs ist also der Elektromotor über den zweiten Gang und die zweite Getriebewelle mit der Ausgangswelle des Parallelschaltgetriebes verbunden, so dass der Elektromotor ein Drehmoment in die Ausgangswelle des Parallelschaltgetriebes einleiten kann, dessen Verlauf so gewählt ist, dass die Rupfschwingungen aktiv abgeschwächt werden.

Bei einer vorteilhaften Ausführungsform der Erfindung wird nach Schritt c), d) und/oder e) geprüft, ob der Anfahrvorgang beendet ist, und Schritt d), e) und/oder f) wird nur dann ausgeführt, wenn der Anfahrvorgang nicht beendet ist. Die Kompensation der Rupfschwingungen ist also außerhalb des Anfahrvorgangs gesperrt, um ein unnötiges Ansteuern des Elektromotors zu vermeiden.

Bezüglich des Kraftfahrzeugantriebsstrangs wird die vorstehend genannte Aufgabe dadurch gelöst, dass der Kraftfahrzeugantriebsstrang als zusätzlichen Antrieb einen Elektromotor aufweist, der über eine Ansteuereinrichtung mit der Steuer- und/oder Regelungsvorrichtung verbunden ist, und dass Steuer- und/oder Regelungsvorrichtung derart ausgebildet ist, dass bei einer Rupfschwingungskomponente, bei der die Drehzahl des rotierenden Bauteils abnimmt, das rotierende Bauteil mit Hilfe des Elektromotors angetrieben und bei einer Rupfschwingungskomponente, bei der die Drehzahl des rotierenden Bauteils zunimmt, das rotierende Bauteil mit Hilfe des Elektromotors abgebremst wird.

Mit Hilfe des Elektromotors können an der Kupplungseinrichtung auftretende Rupfschwingungen durch Überlagern eines entgegengesetzt zu den Rupfschwingungen modulierten Drehmoments aktiv reduziert werden. Der aus der Verbrennungsmaschine und dem Elektromotor gebildete Hybridantrieb ermöglicht außerdem einen Kraftstoff sparenden Betrieb des Kraftfahrzeugantriebsstrangs.

Nachfolgend ist ein Ausführungsbeispiel der Erfindung anhand der Zeichnung näher erläutert. Es zeigt:

Fig. 1    eine schematische Teildarstellung eines ein Parallelschaltgetriebe aufweisenden Kraftfahrzeugantriebsstrangs, wobei eine erste Kupplung geschlossen und eine zweite Kupplung geöffnet sind, und

Fig. 2    eine Darstellung ähnlich Fig. 1, wobei jedoch die erste Kupplung geöffnet und die zweite Kupplung geschlossen ist.

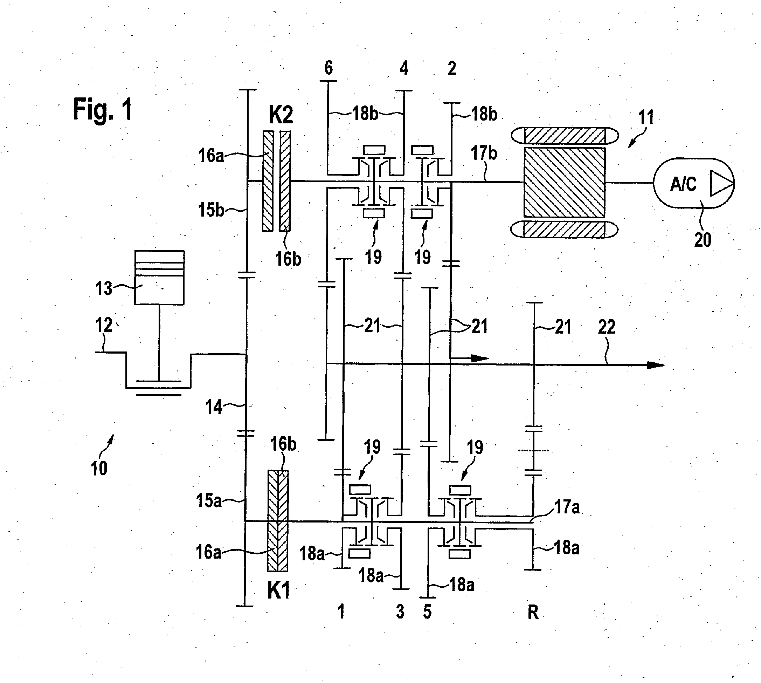

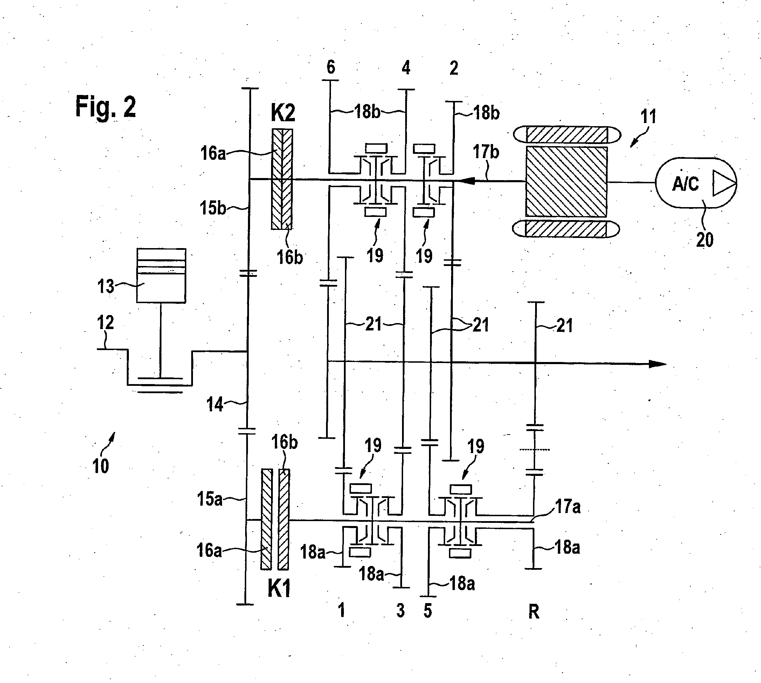

Ein in Fig. 1 und 2 schematisch dargestellter Antriebsstrang eines Kraftfahrzeugs weist einen Hybridantrieb mit einer als Hubkolbenmotor ausgebildeten Verbrennungsmaschine 10 und einem als Startergenerator ausgestalteten Elektromotor 11 als Antrieb auf. Die Verbrennungsmaschine 10 hat eine Kurbelwelle 12, an der über Pleuelstangen Hubkolben 13 gelagert sind, die in an sich bekannter Weise in Zylindern eines Motorblocks von der Kurbelwelle 12 weg und auf die Kurbelwelle 12 zu verschiebbar angeordnet sind. An dem Motorblock ist ein Zylinderkopf vorgesehen, der Ein- und Auslassventile aufweist, die über eine in der Zeichnung nicht näher dargestellte Steuereinrichtung betätigbar sind. Die Hubkolben 13, der Zylinderkopf und die Ein- und Auslassventile begrenzen Brennkammern, in denen ein KraftstoffLuftgemisch gezündet werden kann.

Die Kurbelwelle 12 steht mit einem Schwungrad 14 in Antriebsverbindung, das einen Zahnkranz aufweist, der mit zwei am Umfang des Zahnkranzes versetzt zueinander angeordneten Zahnrädern 15a, 15b kämmt. Diese treiben jeweils eine Kupplungsscheibe 16a an. Eine erste Kupplungsscheibe 16a einer ersten Kupplung K1 ist axial zu einem ersten Zahnrad 15a und eine erste Kupplungsscheibe 16a einer zweiten Kupplung K2 ist axial zu einem zweiten Zahnrad 15b angeordnet. Jeder ersten Kupplungsscheibe 16a ist jeweils eine zweite Kupplungsscheibe 16b zugeordnet. Die jeweils einander zugeordneten ersten und zweiten Kupplungsscheiben 16a, 16b sind in eine Offen- und eine Schließstellung bringbar. In der Offenstellung sind die ersten und zweiten Kupplungsscheiben 16a, 16b axial voneinander beabstandet und in der Schließstellung liegen die Kupplungsscheiben 16a, 16b jeweils reibschlüssig aneinander an.

Die zweite Kupplungsscheibe 16b der ersten Kupplung K1 steht mit einer ersten Getriebeeingangswelle 17a und die zweite Kupplungsscheibe 16b der zweiten Kupplung K2 mit einer zweiten Getriebeeingangswelle 17b eines Parallelschaltgetriebes in Antriebsverbindung. Auf den Getriebeeingangswellen 17a, 17b sind erste Getriebezahnräder 18a, 18b angeordnet, die mittels einer in der Zeichnung nicht näher dargestellten Schalteinrichtung zum Verändern der Getriebeübersetzung jeweils drehfest mit der ihnen zugeordneten Getriebeeingangswelle 17a, 17b verbindbar sind. Zum Synchronisieren der ersten Getriebezahnräder 18a, 18b mit der ihnen jeweils zugeordneten Getriebeeingangswelle 17a, 17b sind Synchronringe 19 vorgesehen. Die auf der ersten Getriebeeingangswelle 17a angeordneten ersten Getriebezahnräder 18a sind dem Rückwärtsgang R bzw. den Vorwärtsgängen 1, 3 und 5 und die auf der zweiten Getriebeeingangswelle 17b angeordneten ersten Getriebezahnräder 18a den Vorwärtsgängen 2, 4 und 6 zugeordnet.

Die zweite Eingangswelle 17b steht mit dem Rotor eines Elektromotors 11 in Antriebsverbindung, der mit seinem Stator drehfest mit dem Motorblock verbunden ist. Eine Wicklung des Elektromotors 11 ist über eine Ansteuereinrichtung 20 mit einem Akku verbunden.

Die ersten Getriebezahnräder 18a, 18b kämmen mit zweiten Getriebezahnrädern 21, die auf einer Ausgangswelle 22 des Parallelschaltgetriebes angeordnet und fest mit dieser verbunden sind. Die Ausgangswelle 22 steht über ein Differential mit in der Zeichnung nicht näher dargestellten Antriebsrädern des Antriebsstrangs in Antriebsverbindung. Die ersten Getriebezahnräder 18a, 18b und die zweiten Getriebezahnräder 21 weisen jeweils unterschiedliche Durchmesser auf.

Zum Starten der Verbrennungsmaschine 10 werden die auf der zweiten Eingangswelle 17b angeordneten, ersten Getriebezahnräder 18b außer Eingriff mit der zweiten Eingangswelle 17b gebracht. Falls die ersten Getriebezahnräder 18b bereits außer Eingriff mit der zweiten Eingangswelle 17b sind, kann dieser Schritt entfallen.

Außerdem werden die erste Kupplung K1 in Offenstellung und die zweite Kupplung K2 in Schließstellung gebracht. Wenn die Kupplungen K1, K2 sich bereits in der betreffenden Stellung befinden, kann dieser Schritt entfallen. Alternativ können die erste Kupplung K1 in Schließstellung und die ersten Getriebezahnräder 18a außer Eingriff mit der ersten Eingangswelle 17a gebracht werden.

Dann wird die Verbrennungsmaschine 10 mit Hilfe des Elektromotors 11 angetrieben, um diese zu starten. Der Elektromotor 11 überträgt dabei ein Antriebsmoment auf die zweite Antriebswelle, das über die zweite Kupplung K2 auf die Kurbelwelle 12 übertragen wird.

Bei geöffneter erster Kupplung K1 wird das Parallelschaltgetriebe derart eingestellt, dass die erste Getriebewelle 17a über den ersten Gang mit der Ausgangswelle 22 des Parallelschaltgetriebes in Antriebsverbindung steht. Ferner wird das Parallelschaltgetriebe bei geöffneter zweiter Kupplung 16b derart eingestellt, dass die zweite Getriebewelle 17b über den zweiten Gang mit der Ausgangswelle 22 verbunden ist.

Dann wird die erste Kupplung K1 zum Anfahren des Kraftfahrzeugs langsam geschlossen, so dass die Verbrennungsmaschine 10 über die erste Kupplung K1, die erste Eingangswelle 17a, ein erstes Getriebezahnrad 18a, ein zweites Getriebezahnrad 21 und die Ausgangswelle 22 ein Antriebsmoment auf die Antriebsräder überträgt. Die Kupplung K2 bleibt weiterhin geöffnet (siehe Fig. 1).

Gleichzeitig wird detektiert, ob Rupfschwingungen vorhanden sind. Dazu kann beilspielsweise ein Drehzahlsignal $N_{Ge}$ für die erste Eingangswelle 17a gemessen und eine eventuell vorhandene schwingende Komponente aus dem Drehzahlsignal $N_{Ge}$ herausgefiltert und dann mit einem Grenzwert verglichen werden.

Wenn Rupfschwingungen vorhanden sind, wird mit Hilfe des Elektromotors 11 auf die zweite Eingangswelle 17b und von dieser über den zweiten Gang auf die Ausgangswelle 22 derart ein Drehmoment übertragen, dass bei einer Rupfschwingungskomponente, bei der die Drehzahl der ersten Eingangswelle 17a abnimmt, diese mit Hilfe des Elektromotors 11 angetrieben und bei einer Rupfschwingungskomponente, bei der die Drehzahl der ersten Eingangswelle 17a zunimmt, diese mit Hilfe des Elektromotors 11 abgebremst wird. Dazu wird ein Steuersignal $M_{Steuer}$ für das Drehmoment $M_{E-Maschine}$ des Elektromotors 11 bereitgestellt und es wird ein Signal für eine in dem Drehzahlsignal $N_{Ge}$ enthaltene rupfende Komponente durch Filterung des Drehzahlsignals $N_{Ge}$ erzeugt. Das Steuersignal $M_{Steuer}$ wird so gewählt, dass die Beschleunigung des Elektromotors 11 mit der mittleren Beschleunigung der zweiten Eingangswelle 17b übereinstimmt. Damit muss die Masse des Elektromotors 11 nicht durch die Verbrennungsmaschine 10 beschleunigt werden. Aus dem Steuersignal und dem Signal für die rupfende Komponente wird ein Differenzsignal gebildet und das Drehmoment des Elektromotors 11 wird in Abhängigkeit von dem Differenzsignal eingestellt:

$$M_{E-Maschine} = M_{Steuer} - k * (N_{Ge} - N_{ge-Filt})$$

Dabei wird $N_{ge-Filt}$ durch Tiefpassfilterung des Drehzahlsignals $N_{Ge}$ erzeugt. k bedeutet einen Proportionalitätsfaktor. Das entsprechende Drehmoment wird über den zweiten Gang auf die Ausgangswelle 22 und von dieser über den ersten Gang auf die erste Eingangswelle 17a übertragen.

Dann wird geprüft, ob der Anfahrvorgang beendet ist. Die Geschwindigkeit des Kraftfahrzeugs kann dazu gemessen und mit einem Grenzwert verglichen werden. Anstelle der Geschwindigkeit kann aber auch die Drehzahl der ersten Eingangswelle gemessen und mit dem Grenzwert verglichen werden.

Wenn der Anfahrvorgang noch nicht beendet ist, wird geprüft, ob die Rupfschwingungen abgeklungen sind. Dazu wird die schwingende Komponente des Drehzahlsignals neu ermittelt und mit dem Grenzwert verglichen. Wenn die Rupfschwingungen nicht abgeklungen sind, werden diese weiter mit Hilfe des Elektromotors 11 gedämpft, wobei die vorstehend beschriebenen Verfahrensschritte erneut durchlaufen werden.

Wenn keine Rupfschwingungen vorhanden sind, wird geprüft, ob der Anfahrvorgang beendet ist. Ist dies nicht der Fall, wird erneut geprüft, ob Rupfschwingungen vorhanden sind, um diese ggf. mit Hilfe des Elektromotors 11 zu kompensieren. Das vorstehend beschriebene Verfahren kann beim Anfahren im Rückwärtsgang R entsprechend angewendet werden.

Wie in Fig. 2 erkennbar ist, kann auch im zweiten Gang angefahren werden. Bei geöffneter zweiter Kupplung K2 wird dazu das Parallelschaltgetriebe derart eingestellt, dass die zweite Getriebewelle 17b über den zweiten Gang mit der Ausgangswelle 22 des Parallelschaltgetriebes in Antriebsverbindung steht. Ferner wird die erste Kupplung K1 geöffnet und/oder die ersten Getriebezahnräder werden mit der ersten Getriebewelle 17a außer Eingriff gebracht.

Dann wird die zweite Kupplung K2 zum Anfahren des Kraftfahrzeugs langsam geschlossen, so dass die Verbrennungsmaschine 10 über die zweite Kupplung K2, die zweite Eingangswelle 17b, das Getriebezahnrad 18a für den zweiten Gang, ein zweites Getriebezahnrad 21 und die Ausgangswelle 22 ein Antriebsmoment auf die Antriebsräder überträgt. Die Kupplung K1 bleibt weiterhin geöffnet (siehe Fig. 2).

Nun wird detektiert, ob Rupfschwingungen vorhanden sind. Dazu wird ein Drehzahlsignal für die zweite Eingangswelle 17b gemessen und eine eventuell vorhandene schwingende Komponente aus dem Drehzahlsignal herausgefiltert und dann mit einem Grenzwert verglichen.

Wenn Rupfschwingungen vorhanden sind, wird mit Hilfe des Elektromotors 11 auf die zweite Eingangswelle 17b und von dieser über den zweiten Gang auf die Ausgangswelle 22 derart ein Drehmoment übertragen, dass bei einer Rupfschwingungskomponente, bei der die Drehzahl der zweiten Eingangswelle 17b abnimmt, diese mit Hilfe des Elektromotors 11 angetrieben und bei einer Rupfschwingungskomponente, bei der die Drehzahl der zweiten Eingangswelle 17b zunimmt, diese mit Hilfe des Elektromotors 11 abgebremst wird. Das Drehmoment $M_{E-Maschine}$ des Elektromotors 11 wird entsprechend der oben angegebenen Gleichung aus dem Steuersignal $M_{Steuer}$, dem Drehzahlsignals $N_{Ge}$ für die zweite Eingangswelle 17b und dem Proportionalitätsfaktor k ermittelt. Im Übrigen werden die zu Fig. 1 aufgeführten Verfahrensschritte entsprechend angewendet.

Erwähnt werden soll noch, dass der Elektromotor 11 auch axial zu der Kurbelwelle 12 angeordnet sein kann.

## Bezugszeichenliste

| | |
|---|---|
| 10 | Verbrennungsmaschine |
| 11 | Elektromotor |
| 12 | Kurbelwelle |
| 13 | Hubkolben |
| 14 | Schwungrad |
| 15a | erstes Zahnrad |
| 15b | zweites Zahnrad |
| 16a | erste Kupplungsscheibe |
| 16b | zweite Kupplungsscheibe |
| 17a | erste Eingangswelle |
| 17b | zweite Eingangswelle |
| 18a | erstes Getriebezahnrad |
| 18b | erstes Getriebezahnrad |
| 19 | Synchronring |
| 20 | Ansteuereinrichtung |
| 21 | zweites Getriebezahnrad |
| 22 | Ausgangswelle |
| K1 | erste Kupplung |
| K2 | zweite Kupplung |

## Patentansprüche

1. Verfahren zur Reduzierung von Rupfschwingungen in einem Kraftfahrzeugantriebsstrang, der eine Verbrennungsmaschine (10) und einen Elektromotor (11) als gemeinsam oder autark benutzbare Kraftfahrzeugantriebe sowie eine Kupplungseinrichtung aufweist, wobei ein rotierendes Bauteil des Antriebsstrangs mit Hilfe der Verbrennungsmaschine (10) angetrieben und die Drehzahl des Bauteils erfasst wird, und wobei detektiert wird, ob Rupfschwingungen vorhanden sind, wobei beim Auftreten von Rupfschwingungen zum aktiven Dämpfen der Rupfschwingungen mit Hilfe des Elektromotors (11) derart ein Drehmoment auf das rotierende Bauteil übertragen wird, dass bei einer Rupfschwingungskomponente, bei der die Drehzahl des rotierenden Bauteils abnimmt, das rotierende Bauteil mit Hilfe des Elektromotors (11) angetrieben und bei einer Rupfschwingungskomponente, bei der die Drehzahl des rotierenden Bauteils zunimmt, das rotierende Bauteil mit Hilfe des Elektromotors abgebremst wird, **dadurch gekennzeichnet, dass** der Kraftfahrzeugantriebsstrang die Verbrennungsmaschine (10), den Elektromotor (11), die Kupplungseinrichtung und ein Doppelkupplungsgetriebe mit dem Antriebsteil und einer ersten Eingangswelle (17a) sowie einer zweiten Eingangswelle (17b) aufweist, dass die Kupplungseinrichtung eine erste Reibungskupplung (K1) zum Verbinden des Antriebsteils mit der ersten Eingangswelle (17a) und eine zweite Reibungskupplung (K2) zum Verbinden des Antriebsteils mit der zweiten Eingangswelle (17b) hat, umfassend folgende Schritte:

a) die Reibungskupplungen (K1, K2) werden in eine Offenstellung gebracht, in der die erste Eingangswelle (17a) und die zweite Eingangswelle (17b) von dem Antriebsteil getrennt sind,
b) für einen Anfahrvorgang des Kraftfahrzeugs wird das Doppelkupplungsgetriebe derart eingestellt, dass die erste Eingangswelle (17a) über einen ersten Gang und die zweite Eingangswelle (17b) über einen zweiten Gang mit einer Ausgangswelle (22) des Doppelkupplunggetriebes in Antriebsverbindung steht,
c) die erste Reibungskupplung (K1) wird zumindest soweit geschlossen, dass sie ein Drehmoment übertragen kann,
d) es wird detektiert, ob beim Anfahren des Kraftfahrzeugs Rupfschwingungen vorhanden sind,
e) wenn Rupfschwingungen vorhanden sind, wird mit Hilfe des Elektromotors (11) dessen Rotor mit der zweiten Eingangswelle (17b) in Antriebsverbindung steht, derart ein Drehmoment auf die zweite Eingangswelle (17b) übertragen, dass bei einer Rupfschwingungskomponente, bei der die Drehzahl der zweiten Eingangswelle (17b) abnimmt, diese mit Hilfe des Elektromotors (11) angetrieben und bei einer Rupfschwingungskomponente, bei der die Drehzahl der zweiten Eingangswelle (17b) zunimmt, diese mit Hilfe des Elektromotors (11) abgebremst wird,
f) es wird mit Schritt d) fortgefahren.

2. Verfahren nach Anspruch 1, dadurch gekennzeichnet, dass das rotierende Bauteil eine Eingangswelle (17a, 17b) des Doppelkupplunggetriebes ist, und dass zum Erfassen der Drehzahl ein Drehzahlsignal für die Eingangswelle (17a, 17b) gemessen wird.

3. Verfahren nach Anspruch 1 oder 2, **dadurch gekennzeichnet, dass** ein Steuersignal für das Drehmoment des Elektromotors (11) bereitgestellt wird, dass ein Signal für eine in dem Drehzahlsignal enthaltene rupfende Komponente vorzugsweise durch Hochpassfilterung des Drehzahlsignals erzeugt wird, dass aus dem Steuersignal und dem Signal für die rupfende Komponente ein Differenzsignal gebildet wird, und dass das Drehmoment des Elektromotors (11) in Abhängigkeit von dem Differenzsignal eingestellt wird.

4. Verfahren nach einem der Ansprüche 1 bis 3, **dadurch gekennzeichnet, dass** das Drehmoment des Elektromotors (11) proportional zu der Amplitude des Differenzsignals eingestellt wird.

5. Verfahren nach einem der Ansprüche 1 bis 4, **dadurch gekennzeichnet, dass** die mittlere Beschleunigung des rotierenden Bauteils ermittelt wird, und dass das Steuersignal derart gewählt wird, dass die Beschleunigung des Elektromotors (11) mit der mittleren Beschleunigung des rotierenden Bauteils übereinstimmt.

6. Verfahren nach Anspruch 1, **dadurch gekennzeichnet, dass** nach Schritt c), d) und/oder e) geprüft wird, ob der Anfahrvorgang beendet ist, und dass Schritt d), e) und/oder f) nur dann ausgeführt wird, wenn der Anfahrvorgang nicht beendet ist.

7. Kraftfahrzeugantriebsstrang, der eine Verbrennungsmaschine (10) und einen Elektromotor (11) als gemeinsam oder autark benutzbare Kraftfahrzeugantriebe mit einer Kupplungseinrichtung und einer Einrichtung zur Erfassung der Drehzahl eines rotierenden Bauteils des Antriebsstrangs, wobei die Einrichtung zur Erfassung der Drehzahl mit einer Steuer- und/oder Regelungsvorrichtung verbunden ist, wobei der Kraftfahrzeugantriebsstrang als zusätzlichen Antrieb den Elektromotor (11) aufweist, dessen Rotor mit der zweiten Eingangswelle (17b) eines Parallelschaftgetriebes in Antriebsverbindung steht und der über eine Ansteuereinrichtung (20) mit der Steuer- und/oder Regelungsvorrichtung verbunden ist, und dass die Steuer- und/oder Regelungsvorrichtung derart ausgebildet ist, dass bei einer Rupfschwingungskomponente, bei der die Drehzahl des rotierenden Bauteils abnimmt, das rotierende Bauteil mit Hilfe des Elektromotors (11) angetrieben und bei einer Rupfschwingungskomponente, bei der die Drehzahl des rotierenden Bauteils zunimmt, das rotierende Bauteil mit Hilfe des Elektromotors (11) abgebremst wird und somit das Drehmoment des Elektromotors (11) derart moduliert wird, dass die Rupfschwingungen aktiv gedämpft werden, **dadurch gekennzeichnet, dass** ein Verfahren mit den offenbarten Komponenten und Verfahrensschritten gemäß einem der Ansprüche 1 bis 6 ausgeführt wird.

8. Kraftfahrzeugantriebsstrang nach Anspruch 7, **dadurch gekennzeichnet, dass** das rotierende Bauteil eine Eingangswelle (17a, 17b) eines Doppelkupplungsgetriebes ist, und dass die Einrichtung zur Erfassung der Drehzahl ein Drehzahlsensor ist.

## Claims

1. Method for reducing juddering vibrations in a motor vehicle drive train which has an internal combustion engine (10) and an electric motor (11) as motor vehicle drives which can be used together or independently, and a clutch device, wherein a rotating part of the drive train is driven using the internal combustion engine (10), and the rotational speed of the part is acquired, and wherein it is detected whether juddering vibrations are present, wherein when juddering vibrations are present, in order to actively damp the juddering vibrations using the electric motor (11), a torque is transmitted to the rotating part in such a way that in the case of a juddering vibration component in which the rotational speed of the rotating part decreases, the rotating part is driven using the electric motor (11), and in the case of a juddering vibration component in which the rotational speed of the rotating part increases, the rotating part is braked using the electric motor, **characterized in that** the motor vehicle drive train has the internal combustion engine (10), the electric motor (11), the clutch device and a double-clutch transmission with the drive part and a first input shaft (17a) as well as a second input shaft (17b), **in that** the clutch device has a first friction clutch (K1) for connecting the drive part to the first input shaft (17a), and a second friction clutch (K2) for connecting the drive part to the second input shaft (17b), comprising the following steps:

   a) the friction clutches (K1, K2) are placed in an open position in which the first input shaft (17a) and the second input shaft (17b) are disconnected from the drive part,
   b) for a starting process of the motor vehicle, the double-clutch transmission is set in such a way that the first input shaft (17a) has a drive connection via a first gearspeed, and the second input shaft (17b) has a drive connection via a second gearspeed, to an output shaft (22) of the double-clutch transmission,
   c) the first friction clutch (K1) is closed at least to such an extent that it can transmit a torque,
   d) it is detected whether juddering vibrations are present during the starting of the motor vehicle,
   e) if juddering vibrations are present, the torque is transmitted to the second input shaft (17b) using the electric motor (11) whose rotor has a drive connection to the second input shaft (17b), in such a way that in the case of a juddering vibration component in which the rotational speed of the second input shaft (17b) decreases, the latter is driven using the electric motor (11), and in the case of a juddering vibration component in which the rotational speed of the second input shaft (17b) increases, the latter is braked using the electric motor (11),

   f) the procedure continues with step d).

2. Method according to Claim 1, **characterized in that** the rotating part is an input shaft (17a, 17b) of the double-clutch transmission, and **in that** in order to acquire the rotational speed a rotational speed signal for the input shaft (17a, 17b) is measured.

3. Method according to Claim 1 or 2, **characterized in that** a control signal for the torque of the electric motor (11) is made available, **in that** a signal for a juddering component contained in the rotational speed signal is generated, preferably, by high-pass filtering of the rotational speed signal, **in that** a differential signal is formed from the control signal and the signal for the juddering component, and **in that** the torque of the electric motor (11) is adjusted as a function of the differential signal.

4. Method according to one of Claims 1 to 3, **characterized in that** the torque of the electric motor (11) is adjusted in proportion to the amplitude of the differential signal.

5. Method according to one of Claims 1 to 4, **characterized in that** the average acceleration of the rotating part is determined, and **in that** the control signal is selected in such a way that the acceleration of the electric motor (11) corresponds to the average acceleration of the rotating part.

6. Method according to Claim 1, **characterized in that** according to step c), d) and/or e) it is checked whether the starting process is ended, and **in that** step d), e) and/or f) is carried out only when the starting process is not ended.

7. Motor vehicle drive train which has an internal combustion engine (10) and an electric motor (11) as motor vehicle drives which can be used together or independently, having a clutch device and a device for acquiring the rotational speed of a rotating part of the drive train, wherein the device for acquiring the rotational speed is connected to an open-loop and/or closed-loop control device, wherein the motor vehicle drive train has the electric motor (11) as an additional drive, the rotor of which electric motor has a drive connection to the second input shaft (17b) of a parallel manual transmission and which electric motor is connected via a control device (20) to the open-loop and/or closed-loop control device, and in that the open-loop and/or closed-loop control device is embodied in such a way that in the case of a juddering vibration component in which the rotational speed of the rotating part decreases, the rotating part is driven using the electric motor (11), and in the case of a juddering vibration component in which the rotational speed of the rotating part increases, the rotating part is braked using the electric motor (11) and therefore the torque of the electric motor (11) is modulated in such a way that the juddering vibrations are actively damped, **characterized in that** a method with the disclosed components and method steps according to one of Claims 1 to 6 is carried out.

8. Motor vehicle drive train according to Claim 7, **characterized in that** the rotating part is an input shaft (17a, 17b) of a double-clutch transmission, and **in that** the device for acquiring the rotational speed is a rotational speed sensor.

**Revendications**

1. Procédé pour réduire les oscillations de broutage dans une chaîne cinématique d'un véhicule automobile qui présente un moteur à combustion interne (10) et un moteur électrique (11) en tant qu'entraînements utilisables conjointement ou de manière autarcique pour le véhicule automobile, ainsi qu'un dispositif d'embrayage, un composant rotatif de la chaîne cinématique étant entraîné à l'aide du moteur à combustion interne (10) et la vitesse de rotation du composant étant détectée, et l'on détecte si des oscillations de broutage sont présentes, et, en présence d'oscillations de broutage, en vue de l'amortissement actif des oscillations de broutage à l'aide du moteur électrique (11), un couple étant transmis au composant rotatif de telle sorte que dans le cas d'une composante d'oscillation de broutage dans laquelle la vitesse de rotation du composant rotatif diminue, le composant rotatif soit entraîné à l'aide du moteur électrique (11) et dans le cas d'une composante d'oscillation de broutage dans laquelle la vitesse de rotation du composant rotatif augmente, le composant rotatif soit freiné à l'aide du moteur électrique, **caractérisé en ce que** la chaîne cinématique du véhicule automobile présente le moteur à combustion interne (10), le moteur électrique (11), le dispositif d'embrayage et une transmission à double embrayage avec la partie d'entraînement et un premier arbre d'entrée (17a) ainsi qu'un deuxième arbre d'entrée (17b), **en ce que** le dispositif d'embrayage a un premier embrayage de friction (K1) pour connecter la partie d'entraînement au premier arbre d'entrée (17a) et un deuxième embrayage de friction (K2) pour connecter la partie d'entraînement au deuxième arbre d'entrée (17b), comprenant les étapes suivantes :

   a) les embrayages de friction (K1, K2) sont amenés dans une position d'ouverture dans laquelle le premier arbre d'entrée (17a) et le deuxième arbre d'entrée (17b) sont séparés par la partie d'entraînement,
   b) pour une opération de démarrage du véhicule automobile, la transmission à double embrayage est ajustée de telle sorte que le premier arbre d'entrée (17a) soit en liaison d'entraînement par le biais d'un premier rapport et que le deuxième arbre d'entrée (17b) soit liaison d'entraînement par le biais d'un deuxième rapport avec un arbre de sortie (22) de la transmission à double embrayage,
   c) le premier embrayage à friction est fermé au moins dans une mesure telle qu'il puisse transmettre un couple,
   d) on détecte si, lors du démarrage du véhicule automobile, des oscillations de broutage sont présentes,
   e) si des oscillations de broutage sont présentes, un couple est transmis au deuxième arbre d'entrée (17b) à l'aide du moteur électrique (11) dont le rotor est en liaison d'entraînement avec le deuxième arbre d'entrée (17b), de telle sorte que dans le cas d'une composante d'oscillation de broutage dans laquelle la vitesse de rotation du deuxième arbre d'entrée (17b) diminue, celui-ci soit entraîné à l'aide du moteur électrique (11) et que dans le cas d'une composante d'oscillation de broutage dans laquelle la vitesse de rotation du deuxième arbre d'entrée (17b) augmente, celui-ci soit freiné à l'aide du moteur électrique (11),
   f) l'étape d) est renouvelée.

2. Procédé selon la revendication 1, **caractérisé en ce que** le composant rotatif est un arbre d'entrée (17a, 17b) de la transmission à double embrayage et **en ce que** pour détecter la vitesse de rotation, un signal de vitesse de rotation pour l'arbre d'entrée (17a, 17b) est mesuré.

3. Procédé selon la revendication 1 ou 2, **caractérisé en ce qu'**un signal de commande pour le couple du moteur électrique (11) est fourni, **en ce qu'**un signal pour une composante de broutage contenue dans le signal de vitesse de rotation est produit de préférence par un filtrage passe-haut du signal de vitesse de rotation, **en ce qu'**à partir du signal de commande et du signal pour la composante de broutage, un signal de différence est formé, et **en ce que** le couple du moteur électrique (11) est ajusté en fonction du signal de différence.

4. Procédé selon l'une quelconque des revendications 1 à 3, **caractérisé en ce que** le couple du moteur électrique (11) est ajusté de manière proportionnelle à l'amplitude du signal de différence.

5. Procédé selon l'une quelconque des revendications 1 à 4, **caractérisé en ce que** l'accélération moyenne du composant rotatif est déterminée et **en ce que** le signal de commande est sélectionné de telle sorte que l'accélération du moteur électrique (11) coïncide avec l'accélération moyenne du composant rotatif.

6. Procédé selon la revendication 1, **caractérisé en ce qu'**après l'étape c), d) et/ou e), on vérifie si l'opération de démarrage est terminée et **en ce que** l'étape d), e) et/ou f) n'est alors mise en oeuvre que si l'opération de démarrage n'est pas terminée.

7. Chaîne cinématique d'un véhicule automobile qui présente un moteur à combustion interne (10) et un moteur électrique (11) en tant qu'entraînements utilisables conjointement ou de manière autarcique pour le véhicule automobile, avec un dispositif d'embrayage et un dispositif pour détecter la vitesse de rotation d'un composant rotatif de la chaîne cinématique, le dispositif pour détecter la vitesse de rotation étant connecté à un dispositif de commande et/ou de régulation, la chaîne cinématique du véhicule automobile présentant, en tant qu'entraînement supplémentaire, le moteur électrique (11), dont le rotor est en liaison d'entraînement avec le deuxième arbre d'entrée (17b) d'une transmission à changement de vitesse parallèle et qui est connecté par le biais d'un dispositif de commande (20) au dispositif de commande et/ou de régulation, et le dispositif de commande et/ou de régulation étant réalisés de telle sorte que dans le cas d'une composante d'oscillation de broutage dans laquelle la vitesse de rotation du composant rotatif diminue, le composant rotatif soit entraîné à l'aide du moteur électrique (11) et que dans le cas d'une composante d'oscillation de broutage dans laquelle la vitesse de rotation du composant rotatif augmente, le composant rotatif soit freiné à l'aide du moteur électrique (11), et le couple du moteur électrique (11) étant ainsi modulé de telle sorte que les oscillations de broutage soient amorties activement, **caractérisée en ce qu'**un procédé ayant les composantes et les étapes de procédé divulguées, selon l'une quelconque des revendications 1 à 6, est mis en oeuvre.

8. Chaîne cinématique d'un véhicule automobile selon la revendication 7, **caractérisée en ce que** le composant rotatif est un arbre d'entrée (17a, 17b) d'une transmission à double embrayage et **en ce que** le dispositif pour détecter la vitesse de rotation est un capteur de vitesse de rotation.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10244026 A1
- DE 19721298 A1